# EUROPÄISCHE PATENTSCHRIFT

(11) **EP 0 482 302 B1**
(45) Veröffentlichungstag und Bekanntmachung des Hinweises auf die Patenterteilung: **10.04.1996**
(21) Anmeldenummer: 91113184.5
(22) Anmeldetag: 06.08.1991
(51) Int. Cl.: H04N 5/76, H04N 5/78

(54) **Einrichtung zur programmgesteuerten Videoaufzeichnung bestehend aus Videoaufzeichnungsgerät und Bar-Code-Leser**
Programme-controlled video recording device comprising a videorecorder and a bar code reader
Dispositif pour l'enregistrement vidéo commandé par un programme comportant un enregistreur vidéo et un lecteur de codes à barres

(30) Priorität: 20.10.1990 DE 4033408
(43) Veröffentlichungstag der Anmeldung: 29.04.1992
(73) Patentinhaber: GRUNDIG E.M.V. Elektro-Mechanische Versuchsanstalt Max Grundig GmbH & Co. KG, D-90762 Fürth (DE)
(72) Erfinder: Boller, Peter, Grundig E.M.V., Max Grundig, W-8510 Fuerth (DE)

(56) Entgegenhaltungen:
- DE-C- 3 313 799
- RUNDFUNKTECHNISCHE MITEILUNGEN Bd. 29, Nr. 4, Juli 1985, NORDERSTEDT DEUTSCHLAND Seiten 161 - 169; A. HELLER: 'VPS - EIN NEUES SYSTEM ZUR BEITRAGSBESTEUERTEN PROGRAMMAUFZEICHNUNG'

## Beschreibung

Es sind Videoaufzeichnungsgeräte bekannt, die zur Steuerung der Aufzeichnung von Programmbeiträgen - in Zeiträumen in welchen keine Bedienungsperson anwesend ist - eine Echtzeituhr zum Vergleich mit vorprogrammierten Start- und Stoppzeiten verwenden, bzw. andere Videoaufzeichnungsgeräte, die über einen Decoder für das Video-Programm-System, abgekürzt VPS, verfügen. Weiterhin ist es bekannt, den Programmiervorgang zur Eingabe der gewünschten Aufzeichnungsdaten, dies sind Programmplatz, Sendedatum, Start- und Stoppzeit, durch die Verwendung von Bar-Code-Lesern, mit den zugehörigen in Bar-Code-Form vorliegenden Aufzeichnungsdaten, zu erleichtern.

Die Kombination eines Videoaufzeichnungsgerätes mit Echtzeituhr und Bar-Code-Leseeinrichtung wird in der EP-A-0 254 518 beschrieben. Den Aufbau und die Funktionsweise von VPS zeigt der Aufsatz "VPS - Ein neues System zur Beitragsgesteuerten Programmaufzeichnung" aus den Rundfunktechnischen Mitteilungen, Jahrgang 29 (1985), Heft 4, Seiten 161 - 169. DE-A-3 313 799 offenbart im Fall IIIB (fig.2) daß im Falle eines aktualisierten, im Printmedium so angekündigten Sendebeitrags senderseitig ein Pseudolabel ausgesendet wird, worauf empfängerseitig die vom Barcode eingelesene, zeitgesteuerte Aufzeichnung einsetzt.

Das bei der Verwendung von Bar-Code-Lesern im Zusammenhang mit Videoaufzeichnungsgeräten auftretende Problem stellt häufig die bei den Bar-Code-Informationen üblicherweise verwendete Start- und -Stoppzeit dar. Ist das verwendete Videoaufzeichnungsgerät nicht mit einem VPS-Decoder ausgerüstet, so kann es zu Aufzeichnungsfehlern kommen, da die Start- und Stoppzeiten lange vor dem Sendetermin von den Rundfunkanstalten festgelegt werden, sich aber durch aktuelle Programmänderungen verschieben können. Diese Verschiebungen werden bei mit VPS-Decoder ausgerüsteten Videoaufzeichnungsgeräten dadurch vermieden, daß die ursprünglich angegebenen Startdaten (Startdatum und Startzeit) als Kennzeichnungslabel verwendet werden. Diese Labels werden zusammen mit dem Sendebeitrag ausgestrahlt und steuern die Aufzeichnung über den VPS-Decoder. Bleiben die VPS-Signale senderseitig aus oder sollen Sender ohne VPS-Signale aufgezeichnet werden, so kann es - wie bei Videoaufzeichnungsgeräten einen VPS-Decoder - durch die zeitlichen Abweichungen ebenfalls zu Aufzeichnungsfehlern kommen.

Aufgabe der Erfindung ist es, die Probleme der oben beschriebenen Art zu lösen.

Diese Aufgabe wird durch die in Anspruch 1 aufgeführten Merkmale gelöst.

Nach der Erfindung erfaßt der Bar-Code-Leser neben dem Programmplatz, dem Sendedatum und der Start- und Stoppzeit zusätzlich eine Start- und Stoppzeit, die aktuell am Tag der Drucklegung der Bar-Code-Informationen festgelegt werden kann. Diese aktuelle Start- und Stoppzeit erlaubt die korrekte Programmierung des Videoaufzeichnungsgerätes für den Fall des Nichtvorhandenseins von VPS-Signalen im empfangenen Programm, bzw. bei einem Videoaufzeichnungsgerät ohne VPS-Decoder, durch die Verwendung der in den jeweiligen Videoaufzeichnungsgeräten vorhandenen Echtzeituhr. Dazu wird am Bar-Code-Leser eingestellt ob es sich um ein Videoaufzeichnungsgerät mit oder ohne VPS-Decoder handelt. Sollte ein Videoaufzeichnungsgerät ohne VPS-Decoder verwendet werden, so übermittelt der Bar-Code-Leser nur die aktuelle Start- und Stoppzeit an das Videoaufzeichnungsgerät, an Videoaufzeichnungsgeräte mit VPS-Decoder jedoch sowohl Start- und Stoppzeit als auch aktuelle Start- und Stoppzeit, wodurch Fehlprogrammierungen, wie oben beschrieben, weitgehend vermieden werden können.

Bei Videoaufzeichnungsgeräten mit VPS-Decoder wird zur Aufzeichnungssteuerung die Start- und Stoppzeit herangezogen, falls die aufzuzeichnende Programmquelle VPS-Informationen aufweist. Für den Fall, daß die aufzuzeichnende Programmquelle keine VPS-Informationen aufweist oder falls diese gestört sind, wird zur Aufzeichnungssteuerung die aktuelle Start- und Stoppzeit herangezogen.

## Patentansprüche

1. Einrichtung zur programmgesteuerten automatischen Videoaufzeichnung bestehend aus einem Videoaufzeichnungsgerät mit oder ohne VPS-Decoder, sowie mit einem Bar-Code-Leser zur Auswertung von Aufzeichnungsdaten die in Form von Bar-Code-Informationen vorliegen und Programmplatz, Sendedatum, Start- und Stoppzeit umfassen,
**dadurch gekennzeichnet,**
daß der Bar-Code-Leser so ausgestaltet ist, daß er neben vorhandenen Aufzeichnungsdaten eine zusätzlich in den Bar-Code-Informationen enthaltene aktuelle Start- und Stoppzeit erfaßt,
daß am Bar-Code-Leser eine Einstellung vorgenommen wird, um festzulegen ob es sich bei dem verwendeten Videoaufzeichnungsgerät um ein Gerät mit oder ohne VPS-Decoder handelt,
daß der Bar-Code-Leser in Abhängigkeit von der gewählten Einstellung an Videoaufzeichnungsgeräte mit VPS-Decoder neben den vorhandenen Aufzeichnungsdaten zusätzlich die aktuelle Start- und Stoppzeit, an Videoaufzeichnungsgeräte ohne VPS-Decoder anstelle der in den vorhandenen Aufzeichnungsdaten enthaltenen Start- und Stoppzeit die zusätzlich vorhandene aktuelle Start- und Stoppzeit übermittelt.

2. Einrichtung nach Anspruch 1, die über einen VPS-Decoder verfügt,
**dadurch gekennzeichnet,**
daß der VPS-Dekoder so ausgestaltet ist,
daß die Aufzeichnung mittels des VPS-Decoders gesteuert wird, falls die aufzuzeichnende Programmquelle VPS-Informationen aufweist, wohingegen die aktuelle Start- und Stoppzeit herangezogen wird, falls die aufzuzeichnende Programmquelle keine VPS-Informationen aufweist oder falls diese gestört sind.

## Claims

1. A device for program-controlled automatic video recording consisting of a video recording device with or without a VPS decoder, and with a bar code reader for the analysis of recording data which occur in the form of items of bar code information and comprise program position, transmission date, start- and stop time, characterised in that the bar code reader is equipped in such manner that it detects, in addition to the available recording data, a current start- and stop time additionally contained in the items of bar code information,
that on the bar code reader a setting is made to specify whether the video recording device which is used is a device with or without a VPS decoder,
that as a function of the selected setting the bar code reader supplies video recording devices with a VPS decoder not only with the available recording data but additionally with the current start- and stop time, and supplies video recording devices without a VPS decoder with the additionally present current start- and stop time instead of the start- and stop time contained in the available recording data.

2. A device as claimed in Claim 1 which possesses a VPS decoder, characterised in that the VPS decoder is equipped in such manner that the recording is controlled by means of the VPS decoder if the program source to be recorded contains items of VPS information, whereas the current start- and stop time is used if the program source to be recorded contains no items of VPS information or if the latter are adulterated.

## Revendications

1. Dispositif d'enregistrement vidéo automatique, commandé par programme, constitué par un appareil d'enregistrement vidéo comportant ou non un décodeur VPS, ainsi qu'un lecteur de code à barres pour l'exploitation des données d'enregistrement, qui sont présentes sous la forme d'informations de code à barres et comprennent une chaîne de programme, une date d'émission, un instant de démarrage et un instant d'arrêt,
caractérisé en ce
que le lecteur de code à barres est équipé de manière à détecter, en dehors de données d'enregistrement présentes, un instant actuel de démarrage et d'arrêt, contenu en supplément dans les informations de code à barres,
qu'un réglage est exécuté dans le détecteur de code à barres pour déterminer si, en ce qui concerne l'appareil d'enregistrement utilisé, il s'agit d'un appareil possédant ou non un décodeur VPS,
qu'en fonction du réglage sélectionné dans des appareils d'enregistrement vidéo comportant un décodeur VPS, le lecteur de code à barres retransmet, en supplément, du côté des données d'enregistrement présentes, les instants actuels de démarrage ou d'arrêt et, dans les appareils d'enregistrement vidéo sans décodeur VPS, il retransmet, à la place des instants de démarrage et d'arrêt contenus dans les données d'enregistrement existantes, les instants actuels de démarrage et d'arrêt présents en supplément.

2. Dispositif selon la revendication 1, qui dispose d'un décodeur VPS,
caractérisé en ce que le décodeur VPS est équipé de telle sorte que l'enregistrement est commandé au moyen du décodeur VPS, dans le cas où la source de programme devant être enregistrée comporte des informations VPS, tandis que les instants actuels de démarrage et d'arrêt sont utilisés dans le cas où la source de programme devant être enregistrée ne comporte aucune information VPS ou bien dans le cas où ces informations VPS sont perturbées.
